# EUROPEAN PATENT SPECIFICATION

(11) **EP 2 929 415 B1**
(45) Date of publication and mention of the grant of the patent: **13.03.2019**
(21) Application number: 13872224.4
(22) Date of filing: 16.01.2013
(51) Int. Cl.: G06F 3/046, G06F 3/03, G06F 3/01, G01S 13/06, H01Q 1/24, H01Q 21/00

(54) **ELECTRONIC DEVICE INCLUDING THREE-DIMENSIONAL GESTURE DETECTING DISPLAY**
ELEKTRONISCHE VORRICHTUNG MIT DREIDIMENSIONALER GESTENERKENNUNGSANZEIGE
DISPOSITIF ÉLECTRONIQUE COMPRENANT DISPOSITIF D'AFFICHAGE À DÉTECTION DES GESTES TRIDIMENSIONNELS.

(43) Date of publication of application: 14.10.2015
(73) Proprietor: BlackBerry Limited, Waterloo, ON N2K 0A7 (CA)
(72) Inventor: GU, Huanhuan, Waterloo, ON N2L 3W8 (CA); WARDEN, James, Paul, Irving, TX 75039 (US); SHEYNMAN, Arnold, Rolling Meadows, IL 60008 (US)
(74) Representative: Hanna Moore + Curley
(86) International application number: PCT/US2013/021732
(87) International publication number: WO 2014/112994

(56) References cited:
- US-A1- 2008 122 803
- US-A1- 2008 238 885
- US-A1- 2010 177 052
- US-A1- 2012 086 647
- US-A1- 2012 092 284

## Description

### Field of Technology

The present disclosure relates to electronic devices, including but not limited to, portable electronic devices having three-dimensional gesture detecting displays and their control.

### Background

Electronic devices, including portable electronic devices, have gained widespread use and may provide a variety of functions including, for example, telephonic, electronic messaging and other personal information manager (PIM) application functions. Portable electronic devices include, for example, several types of mobile stations such as simple cellular telephones, smart phones, wireless personal digital assistants (PDAs), and laptop computers with wireless 802.11 or Bluetooth capabilities.

Portable electronic devices such as PDAs or smart telephones are generally intended for handheld use and ease of portability. Smaller devices are generally desirable for portability. A touch-sensitive display, also known as a touchscreen display, and displays or devices capable of detecting objects spaced from the display are particularly useful on handheld devices, which are small and have limited space for user input and output. The information displayed on the touch-sensitive displays may be modified depending on the functions and operations being performed. The document US 2012/0092284 A1 discloses a portable computing device which includes a three-dimensional touch screen and a core module.

Improvements in devices capable of detecting objects that are spaced from the display are desirable.

### Summary

Accordingly, there is provided a device, a method and a computer-readable storage device as detailed in the claims that follow. The present invention is defined by the independent claims. Further aspects of the invention are defined in the dependent claims. Embodiments which do not fall within the scope of the claims do not describe part of the present invention.

### Brief Description of the Drawings

FIG. 1 is a block diagram of a portable electronic device in accordance with the disclosure.
FIG. 2 is an exploded view of a three-dimensional gesture detecting display of an electronic device in accordance with the disclosure.
FIG. 3 is a simplified perspective view of an electronic device.
FIG. 4 is a perspective view illustrating the electromagnetic field created by antennae of the electronic device of FIG. 3.
FIG. 5 is a perspective view illustrating the effect of an object in the electromagnetic field of FIG. 4.
FIG. 6 is a flowchart illustrating a method of detecting attributes, including location of an object in accordance with the disclosures.
FIG. 7 through FIG. 10 illustrate an example of object detection and a resulting change in a displayed object.

### Detailed Description

The following describes an electronic device and a three-dimensional gesture detecting display that includes a plurality of antennae arranged and constructed to emit a signal and to receive backscatter from the signal, and a processor operably coupled to the antennae to utilize the received backscatter to detect location and at least one of size and shape of an object spaced from the display.

For simplicity and clarity of illustration, reference numerals may be repeated among the figures to indicate corresponding or analogous elements. Numerous details are set forth to provide an understanding of the examples described herein. The examples may be practiced without these details. In other instances, well-known methods, procedures, and components are not described in detail to avoid obscuring the examples described. The description is not to be considered as limited to the scope of the examples described herein.

The disclosure generally relates to an electronic device, such as a portable electronic device or non-portable electronic device. Examples of portable electronic devices include mobile, or handheld, wireless communication devices such as pagers, cellular phones, cellular smart-phones, wireless organizers, personal digital assistants, wirelessly enabled notebook computers, tablet computers, mobile internet devices, electronic navigation devices, and so forth. The portable electronic device may be a portable electronic device without wireless communication capabilities, such as handheld electronic games, digital photograph albums, digital cameras, media players, e-book readers, and so forth. Examples of non-portable electronic devices include desktop computers, electronic white boards, smart boards utilized for collaboration, built-in monitors or displays in furniture or appliances, and so forth.

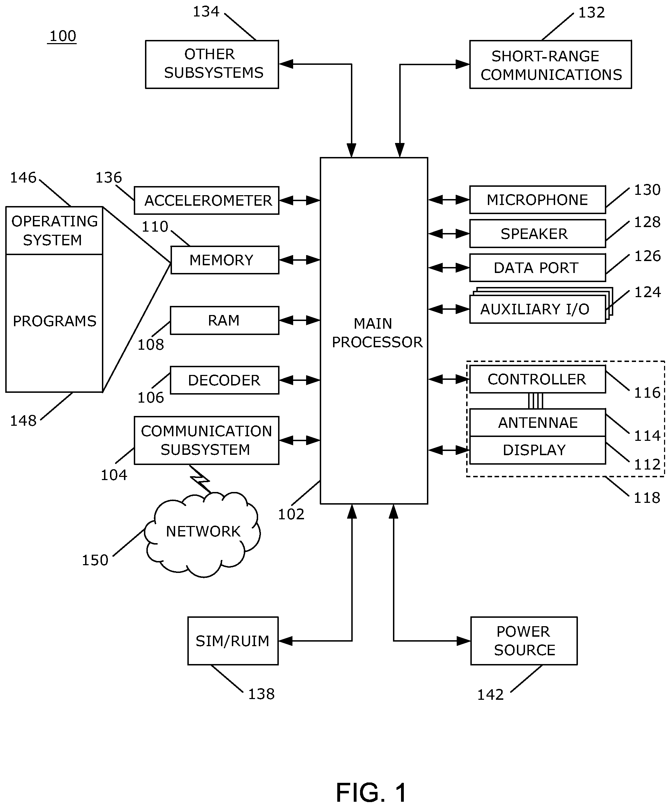

A block diagram of an example of a portable electronic device 100 is shown in FIG. 1. The portable electronic device 100 includes multiple components, such as a processor 102 that controls the overall operation of the portable electronic device 100. Communication functions, including data and voice communications, are performed through a communication subsystem 104. Data received by the portable electronic device 100 is decompressed and decrypted by a decoder 106. The communication subsystem 104 receives messages from and sends messages to a wireless network 150. The wireless network 150 may be any type of wireless network, including, but not limited to, data wireless networks, voice wireless networks, and networks that support both voice and data communications. A power source 142, such as one or more rechargeable batteries or a port to an external power supply, powers the portable electronic device 100.

The processor 102 interacts with other components, such as a Random Access Memory (RAM) 108, memory 110, a three-dimensional gesture detecting display 118, an auxiliary input/output (I/O) subsystem 124, a data port 126, a speaker 128, a microphone 130, short-range communications 132 and other device subsystems 134. The three-dimensional gesture detecting display 118 includes a display 112 and antennae 114 that are coupled to at least one controller 116 that is utilized to interact with the processor 102. The controller 116 and antennae 114 are utilized as a transceiver to transmit and receive signals. Input via a graphical user interface is provided via the three-dimensional gesture detecting display 118. Information, such as text, characters, symbols, images, icons, and other items that may be displayed or rendered on a portable electronic device, is displayed on the display 112 via the processor 102. The processor 102 may also interact with an accelerometer 136 that may be utilized to detect direction of gravitational forces or gravity-induced reaction forces.

To identify a subscriber for network access, the portable electronic device 100 may utilize a Subscriber Identity Module or a Removable User Identity Module (SIM/RUIM) card 138 for communication with a network, such as the wireless network 150. Alternatively, user identification information may be programmed into memory 110.

The portable electronic device 100 includes an operating system 146 and software programs, applications, or components 148 that are executed by the processor 102 and are typically stored in a persistent, updatable store such as the memory 110. Additional applications or programs may be loaded onto the portable electronic device 100 through the wireless network 150, the auxiliary I/O subsystem 124, the data port 126, the short-range communications subsystem 132, or any other suitable subsystem 134.

A received signal such as a text message, an e-mail message, or web page download is processed by the communication subsystem 104 and input to the processor 102. The processor 102 processes the received signal for output to the display 112 and/or to the auxiliary I/O subsystem 124. A subscriber may generate data items, for example e-mail messages, which may be transmitted over the wireless network 150 through the communication subsystem 104. For voice communications, the overall operation of the portable electronic device 100 is similar. The speaker 128 outputs audible information converted from electrical signals, and the microphone 130 converts audible information into electrical signals for processing.

The three-dimensional gesture detecting display 118 includes the antennae 114. The antennae 114 may include transmit antennae and receive antennae. Alternatively, the antennae may include antennae that are operable to transmit and to receive signals. The antennae may comprise any suitable material, such as indium tin oxide (ITO). The antennae may be formed, for example, by depositing ITO on one or more layers on the display 112 and patterning to form the antennae.

One or more objects may be detected by the three-dimensional gesture detecting display 118. The processor 102 may determine attributes of the object, including a location of the object. Location data may include data for a size of an object, a location of the object or location or a single point on the object, such as a point at or near a center of a detected area. The location of a detected object may include x, y, and z components, e.g., horizontal and vertical components, with respect to one's view of the display 112, and distance from the display 112, respectively. The detected object may be a finger, thumb, hand, appendage, or other objects, for example, a stylus, pen, or other pointers.

One or more gestures may also be detected by the three-dimensional gesture detecting display 118. A gesture, such as a movement of an object relative to the three-dimensional gesture detecting display 118, may be identified by attributes of the gesture, including the origin point, the end point, the distance travelled, the duration, the velocity, and the direction, for example. A gesture may be long or short in distance and/or duration. Two points of a gesture may be utilized to determine a direction of the gesture. A gesture may also include a hover. A hover may occur when an object is at a location that is spaced from the three-dimensional gesture detecting display 118 and that is generally unchanged over a period of time.

The display 112 includes a display area in which information may be displayed, and a non-display area extending around the periphery of the display area. The non-display area is utilized to accommodate, for example, electronic traces or electrical connections, adhesives or other sealants, and/or protective coatings around the edges of the display area and information is not displayed in the non-display area. The non-display area may be referred to as an inactive area and is not part of the physical housing or frame of the electronic device. Typically, no pixels of the display are in the non-display area, thus no image can be displayed by the display 112 in the non-display area. Optionally, a secondary display, not part of the primary display 112, may be disposed under the non-display area. Antennae 114 may be disposed in the non-display area, which antennae extend from the display area or may be distinct or separate antennae from the antennae in the display area.

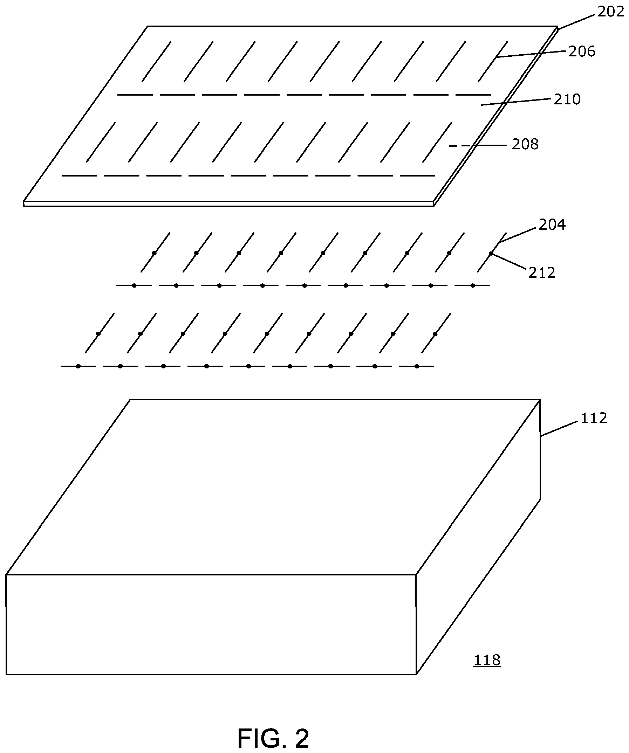

An exploded view of one example of a three-dimensional gesture detecting display 118 of an electronic device 100 is shown in FIG. 2. The three-dimensional gesture detecting display 118 includes the display 112 and a substrate 202 disposed on the display 112. The substrate 202 may be any suitable dielectric or insulator material such as glass. The antennae 114 are disposed on the substrate 202. In this example, the antennae 114 include transmit antennae 204 disposed on one surface 208 of the substrate 202 and receive antennae 206 disposed on an opposite surface 210 of the substrate 202. The transmit antennae 204 are disposed on the surface 208 of the substrate 202 that is closest to or on the display 112 such that the receive antennae 206 are disposed on an outer surface of the substrate 202 or the surface 210 that is farthest from the display 112. Thus, the transmit antennae 204 are disposed on a different layer of the three-dimensional gesture detecting display 118 than the receive antennae 206.

The transmit antennae 204 are arranged in an array on the surface 208 of the substrate 202 and the receive antennae 206 are arranged in an array on the opposite surface 210 of the substrate 202 to provide co-polarized dipoles. Alternatively, cross-polarized antennae may be successfully implemented. A local measurement of the received signal is taken at the port 212 for each receive antenna 206 when in use.

The transmit antennae 204 and the receive antennae 206 are controlled by the controller 116. The controller 116 controls when the antennae are turned on or when they operate. The transmit antennae 204 transmits a radio signal, in the MHz or GHz range, such as a microwave signal. The received signal from the port 212 of the receive antennae 206 is an electromagnetic wave that is utilized to determine the electric field and/or the magnetic field. The electric field and the magnetic field from each of the receive antennae 206 are utilized to detect an object that is spaced from the three-dimensional gesture detecting display 118. The voltage signal from the receive antennae 206 may also be utilized to detect an object that is spaced from the three-dimensional gesture detecting display 118.

An object that is spaced from the three-dimensional gesture detecting display 118, is detected based on changes in the electric field and/or the magnetic field when the object enters the space in front of the three-dimensional gesture detecting display 118, compared to the electric field and/or the magnetic field measured when no object is present. Radar positioning techniques may be utilized to determine the location of the object and the time differences between transmitted signals and received signals may be utilized to determine the distance of the object from the three-dimensional gesture detecting display 118.

Changes in the electric field or magnetic field are determined when the distance between the object and the three-dimensional gesture detecting display 118 changes, i.e., the object moves toward or away from the three-dimensional gesture detecting display 118. The changes in the electric field or magnetic field facilitate detection of distance between the three-dimensional gesture detecting display 118 and the object. Thus, movement toward or away from the three-dimensional gesture detecting display 118 may be detected.

Changes in the electric field or the magnetic field are also determined when the object moves relative to the three-dimensional gesture detecting display 118, but the distance between the three-dimensional gesture detecting display 118 and the object is generally unchanged, i.e., the object moves generally parallel to the three-dimensional gesture detecting display 118. Thus, movement in a plane that is generally parallel to the three-dimensional gesture detecting display 118 may also be detected.

Movement of an object in any direction may be detected based on calculations utilizing the electric field changes and/or the magnetic field changes. The shape of an object may also be determined such that a large object is distinguishable from a small object. The size and shape of the object is determined, for example, based on the changes in the electric field compared to the electric field when an object is not present. Microwave-based imaging may be performed. Thus, in addition to location, shape and/or size may be determined, for example, to identify the object.

When a finger is detected, localized changes in voltage occur as compared to voltage measured when no object is present. For example, significant differences in voltage may be detected at two receive antennae 206. When a palm is detected, changes in voltage occur over a greater area, as compared to voltage measured when no object is present. For example, significant differences in voltage may be detected at all receive antennae 206. This difference occurs because of the size difference between a finger and a palm. Because the palm is larger, the measured voltage is affected or changed at more receive antennae. Utilizing multiple transmit antennae 204 and receive antennae 206, voltage differences determined for each receive antennae 206 may differ depending on the object, providing additional information from which shape is determined.

Movement of the object is also detected such that gestures may be identified based on the gesture attributes such as speed, shape, and direction. Thus, in addition to detecting location and movement of an object, the object may be identified. The number of gestures that may be determined or distinguished is greater compared to a device that is incapable of detecting or identifying size or shape of an object because the three-dimensional gesture detecting display 118 may be utilized to detect and distinguish between objects of different sizes and between shapes of objects, such as shapes that a hand may take, including shapes in which a finger or fingers are extended or a "thumbs-up" shape, for example.

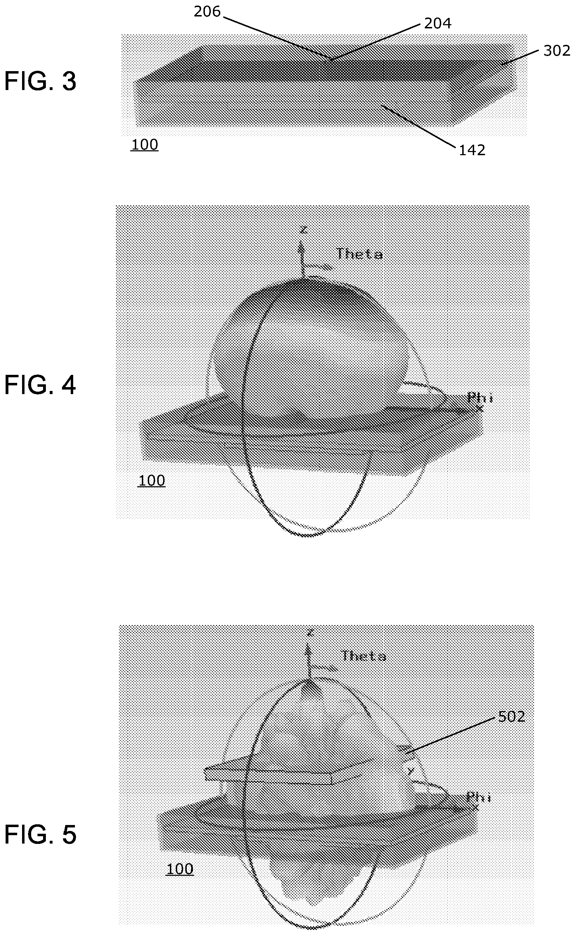

A simplified perspective view of an example of a portable electronic device 100 is illustrated in FIG. 3, FIG. 4, and FIG. 5. In the simplified view of FIG. 3, the portable electronic device 100 includes a single transmit antenna 204 and a single receive antenna 206 that are disposed on surfaces of a substrate of the portable electronic device 100. The portable electronic device 100 includes a printed circuit board 302 that is utilized to support and couple electronic components of the portable electronic device 100. A power source 142, which in this example is a battery, is also illustrated.

The far field pattern of the electromagnetic field that is created when the transmit antenna 204 of FIG. 3 is excited is illustrated in FIG. 4. In the example of FIG. 4, no object is present in the electromagnetic field. The far field pattern of the electromagnetic field is affected by the presence of an object spaced from the three-dimensional gesture detecting display 118. A far field pattern of the electromagnetic field when an object 502 is present in the field is illustrated in FIG. 5. In the simplified example of FIG. 5, the object 502 is a rectangular parallelepiped. Objects of other shapes affect the pattern of the electromagnetic field such that the pattern of the electromagnetic field differs when different objects are present in the field, compared to the pattern of the electromagnetic field when no object is present.

Signals are transmitted from the transmit antenna 204 and backscatter from the signals is received at the receive antennae 206. Backscatter refers to the signal sent from a transmit antennae 204 that is reflected or scattered from an object such as a finger or hand. The backscatter is analyzed to detect the object.

The received signal from the receive antennae 206 is an electromagnetic wave that is utilized to determine the electric field and/or the magnetic field. The signal from each receive antennae 206 is utilized to detect an object that is spaced from the three-dimensional gesture detecting display 118. The voltage signal from the receive antennae 206 may also be utilized to detect an object that is spaced from the three-dimensional gesture detecting display 118. The signals received at the receive antennae are sampled regularly and analyzed to detect objects spaced from the three-dimensional gesture detecting display 118. The signals are collected and the corresponding equation, e.g., Maxwell equation at low frequency, is solved iteratively for different gestures to obtain the solution that is closest to the collected values. For example, a library or table of predefined gestures or objects may be stored on the portable electronic device 100. The expected signals for the predefined gestures or objects may be determined utilizing corresponding Maxwell equations. The expected signals may be determined and stored in the library or table stored on the portable electronic device 100. The expected signals for one of the predefined gesture or objects are compared to the measured signals from each of the receive antennae 206 to determine whether or not the expected signals for the predefined gesture or object match the measured signals from each of the receive antennae 206, within an acceptable error threshold. When a match is identified, within the error threshold, the associated predefined gesture or object is identified as the detected gesture or object. When a match is not identified, the expected signals for a next predefined gesture or object are compared the measure signals. Thus, the process continues until an acceptable match is found or until no predefined gesture or object is a sufficient match.

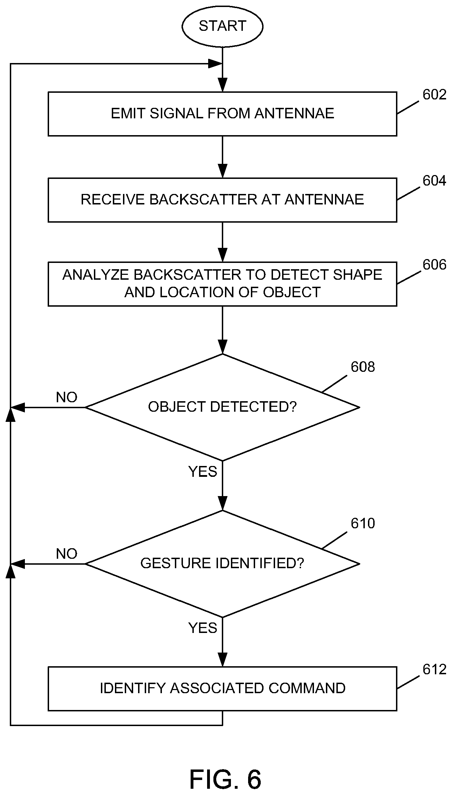

A flowchart illustrating a method of detecting attributes of an object spaced from the display 112, such as the three-dimensional gesture detecting display 118 of FIG. 2, is illustrated in FIG. 6. The method may be carried out by software executed, for example, by the controller 116 and the processor 102. Coding of software for carrying out such a method is within the scope of a person of ordinary skill in the art given the present description. The method may contain additional or fewer processes than shown and/or described, and may be performed in a different order. Computer-readable code executable by at least one processor of the portable electronic device to perform the method may be stored in a computer-readable storage medium, such as a computer-readable storage device.

The transmit antennae 204 are controlled by the controller 116 and signals are emitted 602 from the transmit antennae 204. As described, the signals are high frequency signals in the MHz or GHz range, such as a microwave signal.

Backscatter from the signals is received 604 at the receive antennae 206. The backscatter is analyzed 306 to detect location of an object. The backscatter may also be analyzed 606 to detect the size and/or shape of the object. When an object is detected at 608, the attributes of the object, including location, size and/or shape, are compared to previous attributes of the object based on previously measured values, to identify 610 a gesture. When a gesture is not identified, the process continues at 602 to continue to monitor the object to identify gestures by repeating signal emission from the transmit antennae 204, receiving backscatter at the receive antennae 206 and analyzing to detect location and at least one of size and shape of the object. Thus, values are measured dynamically to detect an object and to detect changes in object attributes such as location. The gesture is identified by comparing attributes of the gesture to attributes of known gestures or defined gestures. When a gesture is identified at 610, the associated command is identified 612. For example, a gesture may be associated with a command utilizing a look-up table. Any suitable command may be utilized. For example, commands may be utilized to open or launch an application, to close an application, to proceed to a next photo or image, to reverse back to a previous image, to scroll, and to zoom, to name a small number of examples.

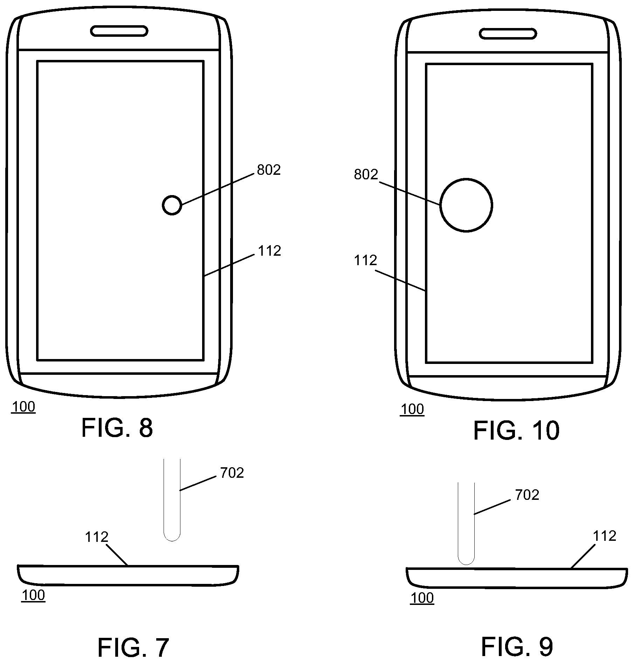

One example of object detection is illustrated in FIG. 7 through FIG. 10. A side view of one example of a portable electronic device 100 is shown in FIG. 7 and a front view the portable electronic device 100 is shown in FIG. 8. In the example of FIG. 7 and FIG. 8, an object 702 is present in the electromagnetic field that is created as signals are emitted from the transmit antennae 204 and backscatter is received at the receive antennae 206. The backscatter is analyzed and the size and general shape of the object 702 is detected. For the purpose of the present example, a corresponding object 802 is displayed on the display 112 of the portable electronic device 100.

The object 702 moves from right to left in the orientation of the portable electronic device 100 illustrated in FIG. 9 and FIG. 10 and movement of the object is detected. For the purpose of the present example, the corresponding object 802 that is displayed on the display 112 of the portable electronic device 100, also moves from right to left in the illustrated orientation. The object 702 also moves closer to the display 112 such that the distance between the object 702 and the display 112 is reduced and the size of the corresponding object 802 that is displayed on the display 112 of the portable electronic device 100, changes to illustrate the change in distance between the object 702 and the display 112. In this example, a reduction in distance between the object 702 and the display 112 is illustrated by an increase in the size of the corresponding object 802 displayed on the display 112.

Advantageously, size and/or shape of an object located in front of and spaced from the display 112 may be detected in addition to location. Utilizing such information, a finger may be distinguished from multiple fingers or from a palm, for example. Thus, the number of attributes of an object or a gesture that may be determined is greater and the number of gestures that may be identified is therefore greater than the number that may be identified utilizing a device that is incapable of detecting or distinguishing size or shape. Further, the distance from the display 112 at which an object may still be detected is greatly increased by comparison to capacitive-type three-dimensional gesture detection in which objects must be very close to the display 112, to be detected.

The present disclosure may be embodied in other specific forms without departing from the essential characteristics. The described embodiments are to be considered in all respects only as illustrative and not restrictive. The scope of the disclosure is, therefore, indicated by the appended claims rather than by the foregoing description.

## Claims

1. An electronic device (100) comprising:
a display (118, 112);
a dielectric substrate (202) disposed on the display;
a plurality of transmit antennae (204) disposed in an array on a first side (208) of the substrate and arranged and constructed to emit radio waves,
and a plurality of receive antennae (206) disposed in an array on a second side (210) of the substrate to receive backscatter from the radio waves such that the transmit antennae (204) are disposed on the first side (208) of the substrate (202) that is closest to or on the display (112) and the receive antennae (206) are disposed on the second side (210) of the substrate (202), the second side (210) being farthest from the display (112);
a processor (102) operably coupled to the antennae (114) to utilize the received backscatter to:
detect voltage at each of the receive antennae disposed in the array on the display; and
based on which ones of the plurality of receive antennae disposed in the array at which voltage changes are detected, detect location of an object spaced from the display, size of the object, and shape of the object;
identify the object based on the size of the object and the shape of the object;
determine attributes of a gesture, the attributes of the gesture being selected from gesture speed, gesture shape, or gesture direction ;
identify the gesture based on the object identified and the attributes of the gesture; and
identify a command associated with the gesture.

2. The electronic device according to claim 1, wherein the processor is arranged and constructed to repeatedly detect location and at least one of size and shape of the object and to utilize the repeated detected location and at least one of size and shape to identify a gesture by the object.

3. The electronic device according to claim 1, wherein the processor is arranged and constructed to: repeatedly detect location and at least one of size and shape of the object; identify a gesture by the object based on the repeated detected location and at least one of size and shape; and compare the gesture to known gestures to identify an associated command.

4. The electronic device according to claim 1, wherein the signal comprises radio waves.

5. The electronic device to claim 1, wherein the backscatter signal comprises a received signal from which at least one of an electric field and a magnetic field is determined.

6. The electronic device according to claim 1, wherein location and at least one of size and shape of the object are detected based on at least one of electric field, magnetic field, and voltage differences determined based on the received backscatter.

7. A method of detecting an object (502) spaced from a display (118, 112) of an electronic device, comprising :
emitting radio waves from a plurality of transmit antennae (204) disposed in an array on a first side (208) of a substrate (202) and receiving backscatter at a plurality of receive antennae disposed in an array on a second side (210) of the substrate, such that the transmit antennae (204) are disposed on the first side (208) of the substrate (202) that is closest to or on the display (112) and the receive antennae are disposed on the second side (210) of the substrate (202); the second side (210) being farthest from the display (112) of the electronic device;
utilizing the received backscatter for:
detecting voltage at each of the receive antennae disposed in the array on the display; and based on which ones of the plurality of receive antennae disposed in the array at which voltage changes are detected,
detecting location of an object spaced from the display, size of the object, and shape of the object;
identifying the object based on the size of the object and the shape of the object;
determining attributes of a gesture, the attributes of the gesture being selected from gesture speed, gesture shape, or gesture direction;
identifying the gesture based on the object identified and the attributes of the gesture; and
identifying a command associated with the gesture .

8. The method according to claim 7, comprising repeating emitting the signal and receiving backscatter and utilizing the received backscatter to identify a gesture by the object.

9. The method according to claim 7, wherein the backscatter signal comprises received signal from which an electric field and a magnetic field is determined.

10. The method according to claim 7, wherein emitting a signal from and receiving backscatter at a plurality of antennae of the electronic device comprises emitting the signal from a plurality of transmit antennae and receiving backscatter at a plurality of receive antennae (206).

11. A computer-readable storage device having computer-readable code stored thereon, the computer-readable code executable by at least one processor of the portable electronic device to perform the method of claim 7.

## Patentansprüche

1. Elektronisches Gerät (100), umfassend:
eine Anzeige (118, 112);
ein dielektrisches Substrat (202), das auf der Anzeige angeordnet ist;
eine Vielzahl von Sendeantennen (204), die in einem Array auf einer ersten Seite (208) des Substrats angeordnet sind und dazu angeordnet und ausgebildet sind, Funkwellen abzugeben,
und eine Vielzahl von Empfangsantennen (206) in einem Array auf einer zweiten Seite (210) des Substrats angeordnet ist, um Rückstreuung der Funkwellen zu empfangen, sodass die Sendeantennen (204) auf der ersten Seite (208) des Substrats (202) angeordnet sind, die der Anzeige am nächsten oder an der Anzeige (112) liegt, und die Empfangsantennen (206) auf der zweiten Seite (210) des Substrats (202) angeordnet sind, wobei die zweite Seite (210) am weitesten von der Anzeige (112) entfernt ist;
einen Prozessor (102), der mit der Antenne (114) wirkverbunden ist, um die empfangene Rückstreuung zu verwenden, um:
die Spannung an jeder der in dem Array an der Anzeige angeordneten Empfangsantenne zu erfassen; und
basierend darauf, bei welchen der Vielzahl von in dem Array angeordneten Empfangsantennen, Spannungsänderungen erfasst werden, die Position eines von der Anzeige beabstandeten Objekts, die Größe des Objekts und die Form des Objekts zu erfassen;
das Objekt basierend auf der Größe des Objekts und der Form des Objekts zu identifizieren;
Attribute einer Geste zu bestimmen, wobei die Attribute der Geste aus Gestengeschwindigkeit, Gestenform oder Gestenrichtung ausgewählt sind;
die Geste basierend auf dem identifizierten Objekt und den Attributen der Geste zu identifizieren; und
einen mit der Geste verknüpften Befehl zu identifizieren.

2. Elektronisches Gerät nach Anspruch 1, wobei der Prozessor dazu angeordnet und ausgebildet ist, die Position und mindestens eins von Größe und Form des Objekts wiederholt zu erfassen und die wiederholte erfasste Position und mindestens eins von Größe und Form zu verwenden, um eine Geste durch das Objekt zu identifizieren.

3. Elektronisches Gerät nach Anspruch 1, wobei der Prozessor dazu angeordnet und ausgebildet ist: die Position und mindestens eins von Größe und Form des Objekts wiederholt zu erfassen; eine Geste durch das Objekt basierend auf der wiederholten erfassten Position und mindestens eins von Größe und Form zu identifizieren; und die Geste mit bekannten Gesten zu vergleichen, um einen verknüpften Befehl zu identifizieren.

4. Elektronisches Gerät nach Anspruch 1, wobei das Signal Funkwellen umfasst.

5. Elektronisches Gerät nach Anspruch 1, wobei das Rückstreusignal ein empfangenes Signal umfasst, aus dem mindestens ein elektrisches Feld und ein magnetisches Feld bestimmt werden.

6. Elektronisches Gerät nach Anspruch 1, wobei die Position und mindestens eins von Größe und Form des Objekts basierend auf mindestens einem von einem elektrischen Feld, einem magnetischen Feld und von basierend auf der empfangenen Rücksteuerung bestimmten Spannungsdifferenzen erfasst werden.

7. Verfahren zum Erfassen eines Objekts (502), das von einer Anzeige (118, 112) eines elektronischen Geräts beabstandet ist, umfassend:
Abgeben von Funkwellen von einer Vielzahl von Sendeantennen (204), die in einem Array auf einer ersten Seite (208) eines Substrats (202) angeordnet sind und Empfangen von Rückstreuung an einer Vielzahl von Empfangsantennen, die in einem Array auf einer zweiten Seite (210) des Substrats angeordnet sind, sodass die Sendeantennen (204) auf der ersten Seite (208) des Substrats (202) angeordnet sind, die der Anzeige am nächsten oder an der Anzeige (112) liegt, und die Empfangsantennen auf der zweiten Seite (210) des Substrats (202) angeordnet sind; wobei die zweite Seite (210) am weitesten von der Anzeige (112) des elektronischen Geräts entfernt ist;
Verwenden der empfangenen Rückstreuung zum:
Erfassen von Spannung an jeder der in dem Array auf der Anzeige angeordneten Empfangsantenne; und basierend darauf, bei welchen der Vielzahl von in dem Array angeordneten Empfangsantennen Spannungsänderungen erfasst werden,
Erfassen der Position eines von der Anzeige beabstandeten Objekts, der Größe des Objekts und der Form des Objekts;
Identifizieren des Objekts basierend auf der Größe des Objekts und der Form des Objekts;
Bestimmen von Attributen einer Geste, wobei die Attribute der Geste aus Gestengeschwindigkeit, Gestenform oder Gestenrichtung ausgewählt sind;
Identifizieren der Geste basierend auf dem identifizierten Objekt und den Attributen der Geste; und
Identifizieren eines mit der Geste verknüpften Befehls.

8. Verfahren nach Anspruch 7, umfassend das Wiederholen des Abgebens des Signals und des Empfangens der Rückstreuung und Verwenden der empfangenen Rückstreuung, um eine Geste durch ein Objekt zu identifizieren.

9. Verfahren nach Anspruch 7, wobei das Rückstreusignal ein empfangenes Signal umfasst, aus dem ein elektrisches Feld und ein magnetisches Feld bestimmt werden.

10. Verfahren nach Anspruch 7, wobei das Abgeben eines Signals von und das Empfangen der Rückstreuung an einer Vielzahl von Antennen des elektronischen Geräts das Abgeben des Signals von einer Vielzahl von Sendeantennen und Empfangen von Rückstreuung an einer Vielzahl von Empfangsantennen (206) umfasst.

11. Computerlesbares Speichergerät mit darauf gespeichertem computerlesbarem Code, wobei der computerlesbare Code von mindestens einem Prozessor des tragbaren elektronischen Geräts ausführbar ist, um das Verfahren nach Anspruch 7 durchzuführen.

## Revendications

1. Dispositif électronique (100) comprenant :
un dispositif d'affichage (118, 112) ;
un substrat diélectrique (202) disposé sur le dispositif d'affichage ;
une pluralité d'antennes d'émission (204) disposées dans un réseau sur un premier côté (208) du substrat et conçues et construites pour émettre des ondes radio,
et une pluralité d'ondes de réception (206) disposées dans un réseau sur un second côté (210) du substrat pour recevoir une rétrodiffusion à partir des ondes radio de telle sorte que les antennes d'émission (204) sont disposées sur le premier côté (208) du substrat (202) qui est le plus proche du dispositif d'affichage (112) ou sur celui-ci et les antennes de réception (206) sont disposées sur le second côté (210) du substrat (202), le second côté (210) étant le plus éloigné du dispositif d'affichage (112) ;
un processeur (102) couplé de manière fonctionnelle aux antennes (114) pour utiliser la rétrodiffusion reçue pour :
détecter une tension au niveau de chacune des antennes de réception disposées dans le réseau sur le dispositif d'affichage ; et
sur la base de quelles antennes de réception parmi la pluralité d'antennes de réception disposées dans le réseau au niveau desquelles des changements de tension sont détectés, détecter l'emplacement d'un objet espacé du dispositif d'affichage, la taille de l'objet et la forme de l'objet ;
identifier l'objet sur la base de la taille de l'objet et de la forme de l'objet ;
déterminer des attributs d'un geste, les attributs du geste étant sélectionnés parmi la vitesse du geste, la forme du geste ou la direction du geste ;
identifier le geste sur la base de l'objet identifié et des attributs du geste ; et
identifier une instruction associée au geste.

2. Dispositif électronique selon la revendication 1, dans lequel le processeur est conçu et construit pour détecter de manière répétée l'emplacement ainsi qu'au moins l'une parmi la taille et la forme de l'objet, et pour utiliser l'emplacement ainsi que l'au moins une parmi la taille et la forme détectés de manière répétée pour identifier un geste par l'objet.

3. Dispositif électronique selon la revendication 1, dans lequel le processeur est conçu et construit pour : détecter de manière répétée l'emplacement ainsi qu'au moins l'une parmi la taille et la forme de l'objet ; identifier un geste par l'objet sur la base de l'emplacement ainsi que l'au moins une parmi la taille et la forme détectés de manière répétée ; et comparer le geste à des gestes connus pour identifier une instruction associée.

4. Dispositif électronique selon la revendication 1, dans lequel le signal comprend des ondes radio.

5. Dispositif électronique selon la revendication 1, dans lequel le signal de rétrodiffusion comprend un signal reçu à partir duquel au moins l'un d'un champ électrique et d'un champ magnétique est déterminé.

6. Dispositif électronique selon la revendication 1, dans lequel l'emplacement ainsi que l'au moins une parmi la taille et la forme de l'objet sont détectés sur la base d'au moins l'un parmi un champ électrique, un champ magnétique et des différences de tension déterminés sur la base de la rétrodiffusion reçue.

7. Procédé de détection d'un objet (502) espacé d'un dispositif d'affichage (118, 112) d'un dispositif électronique, comprenant :
émettre des ondes radio à partir d'une pluralité d'antennes d'émission (204) disposées dans un réseau sur un premier côté (208) d'un substrat (202) et recevoir une rétrodiffusion au niveau d'une pluralité d'antennes de réception disposées dans un réseau sur un second côté (210) du substrat, de telle sorte que les antennes d'émission (204) sont disposées sur le premier côté (208) du substrat (202) qui est le plus proche du dispositif d'affichage (112) ou sur celui-ci et les antennes de réception sont disposées sur le second côté (210) du substrat (202) ; le second côté (210) étant le plus éloigné du dispositif d'affichage (112) du dispositif électronique ;
utiliser la rétrodiffusion reçue pour :
détecter une tension au niveau de chacune des antennes de réception disposées dans le réseau sur le dispositif d'affichage ; et, sur la base de quelles antennes de réception parmi la pluralité d'antennes de réception disposées dans le réseau au niveau desquelles des changements de tension sont détectés,
détecter l'emplacement d'un objet espacé du dispositif d'affichage, la taille de l'objet et la forme de l'objet ;
identifier l'objet sur la base de la taille de l'objet et de la forme de l'objet ;
déterminer des attributs d'un geste, les attributs du geste étant sélectionnés parmi la vitesse du geste, la forme du geste ou la direction du geste ;
identifier le geste sur la base de l'objet identifié et des attributs du geste ; et
identifier une instruction associée au geste.

8. Procédé selon la revendication 7, comprenant la répétition de l'émission du signal et de la réception d'une rétrodiffusion et l'utilisation de la rétrodiffusion reçue pour identifier un geste par l'objet.

9. Procédé selon la revendication 7, dans lequel le signal de rétrodiffusion comprend un signal reçu à partir duquel un champ électrique et un champ magnétique sont déterminés.

10. Procédé selon la revendication 7, dans lequel l'émission d'un signal à partir d'une pluralité d'antennes du dispositif électronique et la réception d'une rétrodiffusion au niveau de celles-ci comprennent l'émission du signal à partir d'une pluralité d'antennes d'émission et la réception d'une rétrodiffusion au niveau d'une pluralité d'antennes de réception (206).

11. Dispositif de stockage lisible par ordinateur ayant un code lisible par ordinateur stocké sur celui-ci, le code lisible par ordinateur pouvant être exécuté par au moins un processeur du dispositif électronique portable pour réaliser le procédé selon la revendication 7.
